# EUROPÄISCHE PATENTSCHRIFT

(11) **EP 1 430 628 B1**
(45) Veröffentlichungstag und Bekanntmachung des Hinweises auf die Patenterteilung: **09.02.2005**
(21) Anmeldenummer: 02774358.2
(22) Anmeldetag: 13.09.2002
(51) Int. Cl.: H04J 3/06, G06F 1/14

(54) **KOMMUNIKATIONSNETZWERK UND VERFAHREN ZUR SYNCHRONISATION EINES KOMMUNIKATIONSZYKLUS**
COMMUNICATION NETWORK AND METHOD FOR SYNCHRONISING A COMMUNICATION CYCLE
RESEAU ET PROCEDE DE COMMUNICATION POUR LA SYNCHRONISATION D'UN CYCLE DE COMMUNICATION

(30) Priorität: 26.09.2001 DE 10147422
(43) Veröffentlichungstag der Anmeldung: 23.06.2004
(73) Patentinhaber: SIEMENS AKTIENGESELLSCHAFT, 80333 München (DE)
(72) Erfinder: ARNOLD, Johann, 90530 Wendelstein (DE); BERNECKER, Herbert, 91560 Heilsbronn (DE); BRÜCKNER, Dieter, 96199 Zapfendorf (DE); GÖTZ, Franz-Josef, 91180 Heideck (DE); KLOTZ, Dieter, 90768 Fürth (DE); KRAUSE, Karl-Heinz, 90475 Nürnberg (DE); MÜLLER, Christiane, 91083 Baiersdorf (DE); SCHEITHAUER, Gerhard, 91058 Erlangen (DE); SCHIMMER, Jürgen, 90473 Nürnberg (DE)
(86) Internationale Anmeldenummer: PCT/DE2002/003437
(87) Internationale Veröffentlichungsnummer: WO 2003/028259

(56) Entgegenhaltungen:
- EP-A- 0 991 216
- US-A- 6 042 477

## Beschreibung

Die Erfindung betrifft ein Kommunikationssystem und Verfahren zur Synchronisation eines Kommunikationszyklus, insbesondere zur Anwendung in Automatisierungssystemen.

Aus dem Stand der Technik sind verschiedene Verfahren und Systeme zur Herstellung von Kommunikationsverbindungen zwischen den Teilnehmern eines Datennetzes bekannt. Weit verbreitet sind Bussysteme, bei denen jeder Teilnehmer jeden anderen Teilnehmer des Datennetzes direkt über das Bussystem adressieren kann. Ferner sind schaltbare Datennetze bekannt, bei denen so genannte Punkt-zu-Punkt Verbindungen hergestellt werden, d. h., ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei im weiteren synonym zur oben erwähnten Übertragung von Datentelegrammen oder Datenpaketen verwendet.

Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäss IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Ebenso ist an sich aus dem Stand der Technik bekannt in einem solchen Automatisierungssystem ein synchrones, getaktetes Kommunikationssystem mit Äquidistanz-Eigenschaften zu verwenden. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind.

Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden. Als Datennetze werden beispielsweise Bussysteme wie z.B. Feldbus, Profibus, Ethernet, Industrial Ethernet, FireWire oder auch PC-interne Bussysteme (PCI), etc. verwendet.

Automatisierungskomponenten (z.B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Zur Anwendung in Automatisierungssystemen ist insbesondere aus dem Stand der Technik der PROFIBUS sowie PROFInet bekannt. Technische Informationen finden sich hierzu unter www.profibus.com. In Profibusnetzen wird die Synchronisation der Kommunikationszyklen, d. h. der so genannten Isochronzyklen, über eine Phase Locked Loop (PLL) vollständig in Hardware realisiert. Dies ist möglich, da den Profibus-Topologien Bus-Strukturen zugrunde liegen. Ein Aufbau von Punkt-zu-Punkt Verbindungen ist hiermit jedoch nicht möglich, insbesondere nicht in einem auf Ethernet basierenden Netzwerk. Die in Hardware realisierte PLL eines Profibus-Systems führt zu Schwingungseffekten in einem Ethernet-Netzwerk.

EP 0 991 216 und US 6 042 477 offenbaren die Merkmale der Präambel der unabhängigen Ansprüche 1, 10 und 11.

Der Erfindung liegt daher die Aufgabe zugrunde, ein verbessertes Verfahren zur Synchronisation eines Kommunikationszyklus, einen verbesserten Kommunikations-Knoten sowie ein verbessertes Kommunikations-System und Automatisierungssystem und ein entsprechendes Computerprogrammprodukt zu schaffen.

Die Erfindung erlaubt es Punkt-zu-Punkt Verbindungen zwischen den Knoten eines Ethernet-Netzwerkes aufzubauen. Die einzelnen Kommunikationsverbindungen zwischen den Knoten laufen dabei vorzugsweise in zueinander synchronen Kommunikationszyklen ab. Zur Synchronisation der Kommunikationszyklen ist in jedem der Knoten ein Regler vorgesehen.

Nach einer bevorzugten Ausführungsform der Erfindung erfolgt die Nachregelung eines Kommunikationszyklus gleichmäßig über einen Kommunikationszyklus verteilt, d. h. ver teilt über den aktuellen Kommunikationszyklus oder den nachfolgenden Kommunikationszyklus. Damit ist erreichbar, dass der unterlagerte höherfrequente Zyklus innerhalb des Isochronzyklus lediglich einen so genannten Jitter von einem Timer-Takt aufweist.

Nach einer weiteren bevorzugten Ausführungsform der Erfindung wird der Soll-Wert der Zeitbasis in jedem der Knoten von einem Taktschläger zur Verfügung gestellt. Der Taktschläger generiert ein Datentelegramm an einen bestimmten Knoten mit dem Soll-Wert der Zeitbasis des Knotens zum Empfangszeitpunkt des Datentelegramms an dem Knoten, indem der Taktschläger den Soll-Wert aus der Zeitbasis des Taktschlägers unter Berücksichtigung der Laufzeit des Datentelegramms zu dem Knoten ermittelt.

Im Weiteren werden bevorzugte Ausführungsbeispiele der Erfindung mit Bezugnahme auf die Zeichnungen näher erläutert. Es zeigen:
- Fig. 1: ein Blockdiagramm einer Ausführungsform eines erfindungsgemäßen Kommunikationssystems,
- Fig. 2: ein Blockdiagramm einer Ausführungsform eines erfindungsgemäßen Kommunikationsknotens,
- Fig. 3: ein Flussdiagramm einer bevorzugten Ausführungsform eines erfindungsgemäßen Verfahrens zur Synchronisation von Kommunikationszyklen,
- Fig. 4: ein Signaldiagramm zur Veranschaulichung der Nachregelung der Zeitbasis in einem Kommunikationsknoten.

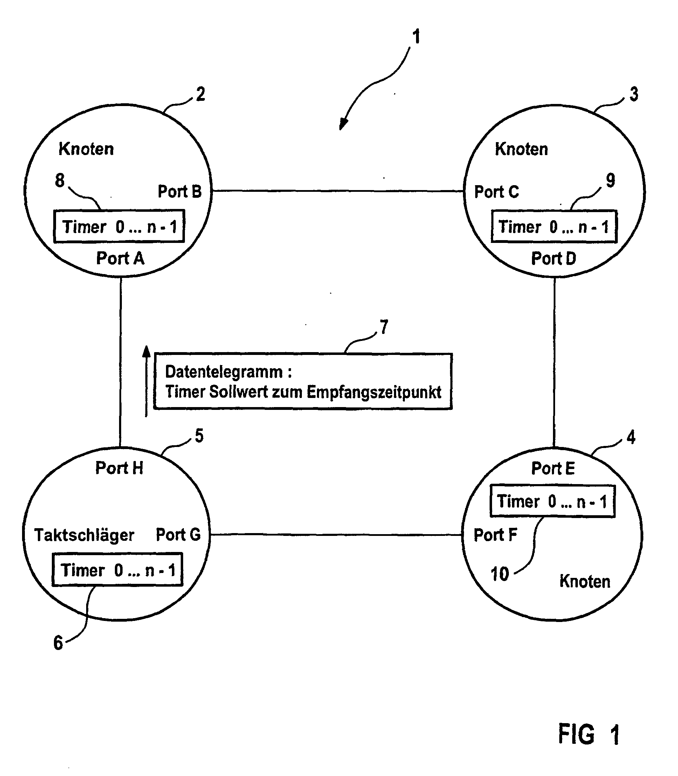

Die Fig. 1 zeigt ein Netzwerk 1 mit den Kommunikationsknoten 2, 3, 4 und 5. Bei dem Kommunikationsknoten 5 handelt es sich um einen Taktschläger-Knoten, der die Referenzzeitbasis für die Synchronisation der Zeitbasen in den anderen Knoten des Netzwerks 1 zur Verfügung stellt. Die Referenztaktschlägerzeitbasis des Kommunikationsknotens 5 wird durch einen Timer 6 generiert, welcher durch Taktung mit einer lokalen Clock des Kommunikationsknotens 5 ständig von 0 bis n-1 zählt.

Der Kommunikationsknoten 5 dient zur Erzeugung eines Datentelegramms 7 für den Knoten 2. Das Datentelegramm 7 beinhaltet den Soll-Wert der Zeitbasis des Knotens 2 zum Empfangszeitpunkt des Datentelegramms.

Die Zeitbasis des Knotens 2 ist durch einen Timer 8 realisiert, der prinzipiell gleich aufgebaut ist wie der Timer 6 des Kommunikationsknotens 5. Der Timer 8 hat eine eigene lokale Clock zur Taktung des Zählwerks des Timers, die unabhängig von der Clock des Kommunikationsknotens 5 ist. Beim Einschalten des Knotens 2 ist der Timer 8 daher zu dem Timer 6 asynchron. Nach einer anfänglichen Synchronisation ist ständig eine Nachregelung erforderlich, da die Taktfrequenzen der verschiedenen Clocks der Zeitbasen nie genau identisch sind.

Zur Synchronisation der Zeitbasis des Knotens 2, d. h. von dessen Timer 8, erzeugt der Kommunikationsknoten 5 das Datentelegramm 7. Das Datentelegramm 7 wird von dem Port H des Kommunikationsknotens 5 an den Port A des Kommunikationsknotens 2 über die entsprechende Netzwerkverbindung in dem Netzwerk 1 gesendet. Auf diese Art und Weise erhält der Kommunikationsknoten 2 den notwendigen Soll-Wert für die Nachregelung von dessen Zeitbasis.

Entsprechend erhalten auch die Kommunikationsknoten 3 und 4 von den Kommunikationsknoten 5 Datentelegramme 7 zur Regelung der entsprechenden Timer 9 und 10.

Nach der Synchronisation der Zeitbasen in den einzelnen Knoten 2, 3 und 4 des Netzwerks 1 sind die Kommunikationszyklen von Punkt-zu-Punkt Verbindungen des Netzwerks 1 zueinander synchron. Beispielsweise kann der Kommunikationsknoten 2 an den Kommunikationsknoten 3 ein oder mehrere Datentelegramme während eines Kommunikationszyklus mittels einer Punkt-zu-Punkt Verbindung zwischen dem Port B des Kommunikationsknotens 2 und dem Port C des Kommunikationsknotens 3 senden.

Entsprechend können auch Datentelegramme während des synchronisierten Kommunikationszyklus von dem Port 4 des Kommunikationsknotens 3 an dem Port B des Kommunikationsknotens 2 empfangen werden. Das gleiche trifft entsprechend zu für die Kommunikation von zwei verschiedenen Kommunikationsknoten, die durch eine Netzwerkverbindung des Netzwerks 1 miteinander verknüpft sind.

Wenn eine solche unmittelbare Netzwerkverbindung nicht besteht, wird eine Kommunikationsverbindung über ein Koppelfeld in den Kommunikationsknoten hergestellt. Wenn beispielsweise der Kommunikationsknoten 4 ein Datentelegramm an den Kommunikationsknoten 2 senden möchte, wird dies so erfolgen, dass der Kommunikationsknoten 4 zunächst von dessen Port E an den Port D des Kommunikationsknotens 3 das Datentelegramm sendet, von wo aus es über das Koppelfeld des Kommunikationsknotens 3 an den Port C weitergeleitet wird, um von dort über die direkte Netzwerkverbindung Punkt-zu-Punkt zu dem Port B des Kommunikationsknotens 2 übertragen zu werden.

Dieser Vorgang setzt insbesondere für echtzeitfähige Datenübertragung in einem deterministischen Kommunikationssystem, wie sie insbesondere für die Zwecke der Automatisierungstechnik benötigt wird, eine Synchronisation der Kommunikationszyklen der einzelnen Punkt-zu-Punkt Verbindungen in dem Netzwerk 1 voraus.

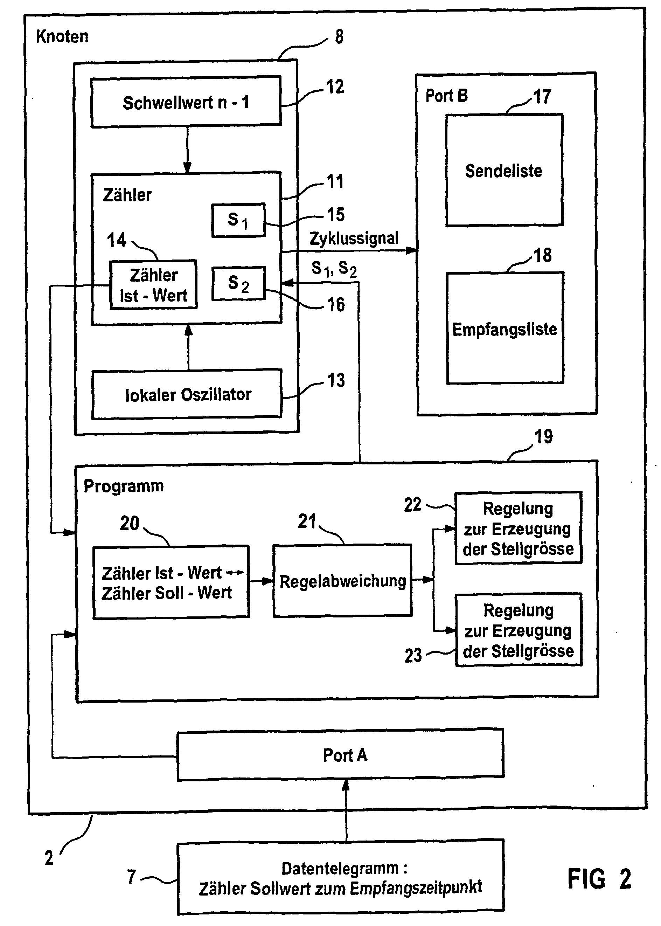

Die Fig. 2 zeigt ein Blockdiagramm des Kommunikationsknotens 2 der Fig. 1. Der Timer 8 des Kommunikationsknotens 2 hat einen Zähler 11, der ständig von 0 bis zu dem Schwellwert n-1 in dem Schwellwertregister 12 zählt. Der Zähler 11 wird durch einen lokalen Oszillator 13, d. h. eine so genannte Clock, getaktet.

Der Inhalt des Schwellwertregisters 12, d. h. der Parameter n, ist durch einen Benutzer wählbar. Durch die Wahl des Parameters n wird die Länge eines Kommunikationszyklus definiert.

Der Zähler 11 hat ein Register 14 mit dem Ist-Wert des Zählers. Ferner hat der Zähler 11 ein Register 15 und ein Register 16, jeweils für die Speicherung eines Parameters S₁ und S₂ der Stellgrößen für die Regelung des Zählers 11 zur Synchronisation der Zeitbasis des Kommunikationszyklus.

Bei Erreichung des durch den Inhalt des Schwellwertregisters 12 gegebenen Schwellwerts gibt der Zähler 11 ein Zyklussignal ab, welches einen Übertragungszyklus startet. Dieses Zyklussignal wird beispielsweise an den Port B des Kommunikationsknotens 2 ausgegeben. Der Port B beinhaltet eine Sendeliste 17 und eine Empfangsliste 18. Während eines Kommunikationszyklus werden sowohl die Sendeliste 17 als auch die Empfangsliste 18 abgearbeitet.

Der Kommunikationsknoten 2 hat ferner ein Programm 19. Das Programm 19 hat ein Programm-Modul 20 für die Eingabe des Zähler-Ist-Werts des Zählers 11 und des Zähler-Soll-Werts. Ferner hat das Programm 19 ein Programm-Modul 21 zur Bestimmung einer Regelabweichung aus dem Vergleich von Zähler-Ist-Wert und Zähler-Soll-Wert. Ferner hat das Programm 19 Programm-Module 22 und 23 mit jeweils einer Regelvorschrift zur Erzeugung einer Stellgröße zur Regelung bzw. Nachregelung der Zeitbasis entsprechend der Regelabweichung. Das Programm-Modul 22 dient dabei zur Regelung in einer Initialisierungsphase und das Programm-Modul 23 zur Nachregelung während des Betriebs. Beide Programm-Module 22 und 23 erzeugen die Parameter S₁ und S₂ der Stellgröße für die Nachregelung der Zeitbasis, d. h. des Zählers 11 des Timers 8.

Das Programm 19 empfängt an dessen Eingang den Inhalt des Registers 14, d. h. den Zähler-Ist-Wert und erhält außerdem über eine Kommunikationsverbindung des Kommunikationsknotens 2 mit dem Kommunikationsknoten 5 (vgl. Fig. 1) das Datentelegramm 7 (vgl. ebenfalls Fig. 1) über den Port A des Kommunikationsknotens 2.

Während der Initialisierungsphase des Knotens 2, d. h. während der anfänglichen Synchronisation des asynchron laufenden Zählers 11, empfängt der Kommunikationsknoten 2 das Datentelegramm 7 mit dem aktuellen Zähler-Soll-Wert. Dieses Datentelegramm 7 wird von dem Kommunikationsknoten 5, d. h. dessen Port H am Port A des Kommunikationsknotens 2 empfangen und von dort zum Programm 19 weitergeleitet.

Ebenfalls wird in das Programm 19 der Zähler-Ist-Wert aus dem Register 14 eingegeben. Aus dem Programm-Modul 20 werden die entsprechenden Zähler-Ist- und Soll-Werte dann an das Programm-Modul 21 weitergeleitet, um die Regelabweichung zu ermitteln.

Hierzu greift das Programm-Modul 21 während der Initialisierungsphase auf das Programm-Modul 22 zu. Dieses erzeugt dann die Stellgröße, d. h. die Parameter S₁ und S₂ der Stellgröße . Diese Parameter werden von dem Programm 19 in die Register 15 bzw. 16 geschrieben. Diese Nachregelung wird vorzugsweise erst, nachdem das Zyklussignal abgegeben worden ist, wirksam, d. h. für den nachfolgenden Kommunikationszyklus.

Der Parameter S₁ gibt für einen solchen nachfolgenden Kommunikationszyklus an, welche der Takte in dem Kommunikationszyklus durch die Regelung beeinflusst werden sollen. Hierbei kann es sich z. B. um jeden zweiten, dritten oder m-ten Takt handeln. Der Parameter S₂ in dem Register 16 gibt hingegen an, wie mit den zu beeinflussenden Takten zu verfahren ist. Vorzugsweise ist der Inhalt des Registers 16 entweder 0 oder 2, d. h. es wird eine Zyklusverlängerung dadurch erreicht, dass der Zähler 11 bei dem betreffenden Takt nicht inkrementiert wird oder es wird eine Zyklusverkürzung dadurch erreicht, indem der Zähler 11 an dem betreffenden Takt um 2 inkrementiert wird. Die Nachregelung mittels der Parameter S₁ und S₂ muss jedoch nicht zwingend im unmittelbar nachfolgenden Kommunikationszyklus erfolgen, sondern kann auch in einem späteren Kommunikationszyklus vorgenommen werden.

Nach der Initialisierungsphase, d. h. nach der anfänglichen Synchronisation des zunächst völlig asynchron laufenden Zählers 11 wählt das Programm-Modul 21 das Programm-Modul 23 für die Nachregelung, welches dann die Parameter S₁ und S₂ nach der für die Betriebsphase zur Anwendung kommenden Regelvorschrift erzeugt. Durch diese Art und Weise der Nachregelung wird die Verlängerung bzw. Verkürzung des Kommunikationszyklus gleichmäßig über die Takte während eines Kommunikationszyklus verteilt.

Nach einer alternativen bevorzugten Ausführungsform wird die Synchronisierung während der Initialisierungsphase des Knotens nicht durch eine Regelung vorgenommen, bei der (wie im Betrieb) die Anzahl der auszuregelnden Takte innerhalb des Zyklus gleichverteilt werden. Mit Hilfe des ersten Synchronisations-Telegramms in der Initialisierungsphase wird dagegen der Synchronisations-Slave erstmals "hart" auf den Wert des Synchronisations-Masters gesetzt.

Dies ist vorteilhaft, um bei einer max. Regeldifferenz von einem halben Isochronzyklus keine unnötig langen Einschwingzeiten zu erhalten. Dies ist insbesondere bei Netzen mit mehreren Knoten erforderlich, da ansonsten u.U. Schwingungseffekte im Netz auftreten können, die eventuell überhaupt kein Einschwingen und damit keine Synchronisation zulassen.

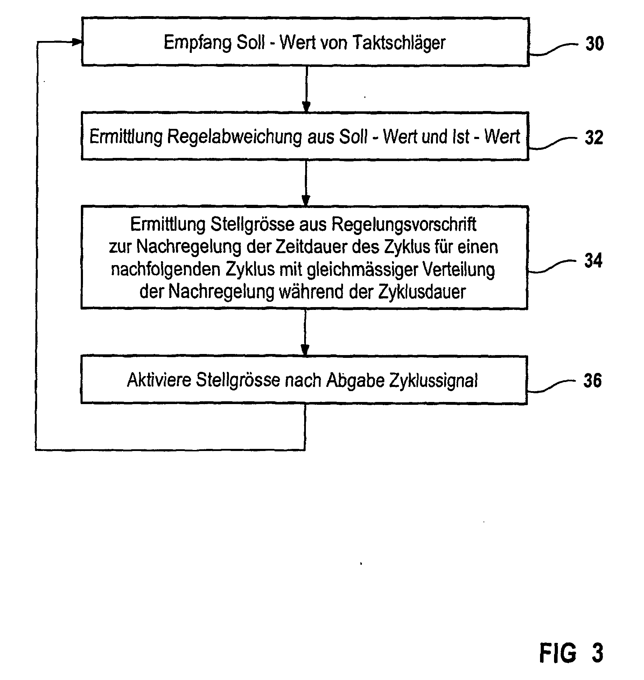

Die Fig. 3 zeigt ein Flussdiagramm einer Ausführungsform des erfindungsgemäßen Verfahrens. In dem Schritt 30 erfolgt ein Empfang des Soll-Werts der Zeitbasis des betreffenden Kommunikationsknotens von einem Taktschläger des Kommunikationssystems. In dem Schritt 32 wird aus dem Unterschied zwischen Soll-Wert und dem Zähler-Ist-Wert der Zeitbasis des betreffenden Kommunikationsknotens eine Regelabweichung ermittelt.

In dem Schritt 34 wird aus dieser Regelabweichung mittels einer Regelungsvorschrift eine Stellgröße zur Nachregelung der Zeitbasis, d. h. der Zeitdauer eines Kommunikationszyklus, ermittelt. Die Ermittlung der Stellgröße erfolgt dabei so, dass die Nachregelung der Zeitdauer des nachfolgenden Kommunikationszyklus möglichst gleichmäßig über die Takte des Kommunikationszyklus verteilt erfolgt.

Die tatsächliche Nachregelung des Kommunikationszyklus erfolgt in dem Schritt 36 durch Aktivierung der entsprechenden Stellgrößen in dem Timer des betreffenden Kommunikationsknotens nach Abgabe des Zyklussignals, d. h. bei Beginn des nachfolgenden Kommunikationszyklus.

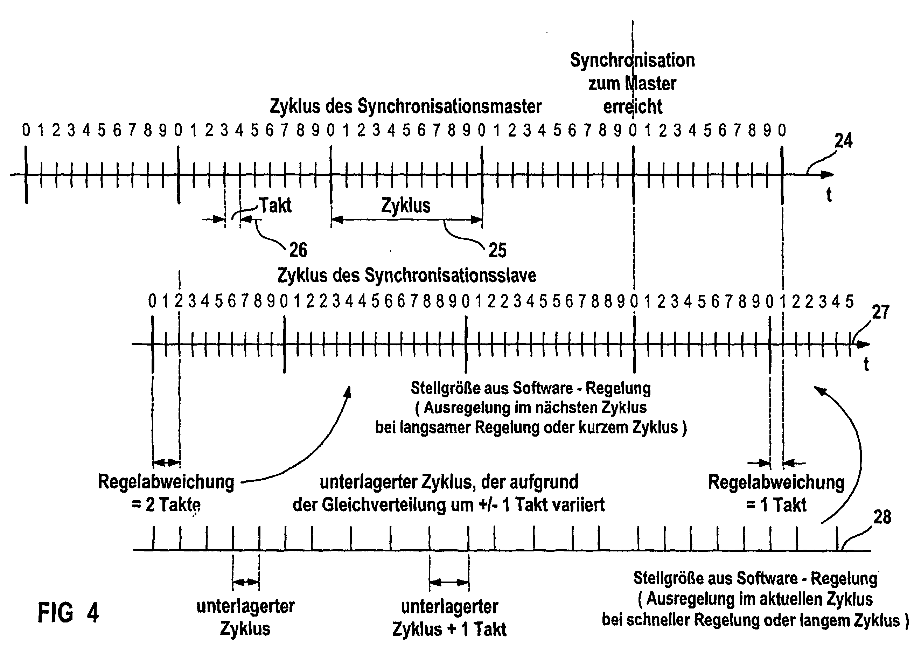

Die Fig. 4 zeigt ein Beispiel für die Anwendung des erfindungsgemäßen Regelungsverfahrens. Ein Signal 24 des Synchronisationsmasters, d. h. der Takt des Taktschläger-Knotens, ist in Zyklen 25 unterteilt. In jedem Zyklus 25 zählt der Timer des Taktschläger-Knotens von 0 bis 9, d. h. es werden 10 Takte 26 pro Zyklus 25 erzeugt. Dadurch ist die Taktschlägerzeitbasis für die Synchronisation der Kommunikationszyklen in dem Kommunikationssystem gegeben.

Das Signal 27 gehört zu einem Synchronisationsslave, d. h. einen der Kommunikationsknoten des Kommunikationssystems, dessen Zeitbasis für die Synchronisation von dessen Kommunikationszyklen nachzuregeln ist. Der Synchronisationsslave hat anfänglich eine Regelabweichung von dem Zyklus des Synchronisationsmasters von zwei Takten. Aus dieser Regelabweichung wird eine entsprechende Stellgröße ermittelt. Die Stellgröße gibt an, ob innerhalb des nächsten Kommunikationszyklus dieser Kommunikationszyklus verlängert oder verkürzt werden muss, und um wieviel gegebenenfalls der nächste Kommunikationszyklus verändert werden muss.

In dem hier betrachteten Beispielfall soll der nachfolgende Kommunikationszyklus um vier Takte verlängert werden. Dazu soll jeder zweite Takt wiederholt werden. Die entsprechenden Parameter S₁ und S₂ (vgl. Fig. 2) sind dann S₁ = 2 und S₂ = 0. Dabei ist von besonderem Vorteil, dass die zusätzlichen vier Takte nicht einfach an den Zyklus zu dessen Verlängerung angehängt werden, sondern innerhalb des Zyklus gleichverteilt werden, so dass der unterlagerte Zyklus-Takt 28 aufgrund dieser Gleichverteilung höchstens um +/- einen Takt variiert. Dadurch ist vermieden, dass der Zyklus-Takt 28 innerhalb des Kommunikationszyklus gegenüber anderen Kommunikationszyklen unverhältnismäßig am Ende des Kommunikationszyklus verlängert wird. Damit wird erreicht, dass der unterlagerte höherfrequente Zyklus-Takt 28 innerhalb des Kommunikationszyklus lediglich einen Jitter von einem Timer-Takt aufweist.

Die vorliegende Erfindung ist besonders vorteilhaft, indem sich eine verteilte Software-/ Hardwareregelung des Kommunikationszyklus, d. h. des so genannten Isochronzyklus, in echtzeitfähigen Netzwerkkomponenten, insbesondere so genannten Ethernet-Switches, realisieren lässt. Dies ermöglicht eine dynamische Anpassung der Regelalgorithmen je nach Netzausprägung bzw. Einsatzgebiet im Feld. Dabei kann sich die Regelung in der Initialisierungs- oder Hochlaufphase des Kommunikationssystems von der Regelung im Betrieb unterscheiden. Ferner können aufgrund der Gleichverteilung der Stellgröße und der damit einhergehenden Nachregelung der Zeitbasis während eines Kommunikationszyklus auch unterlagerte Zyklen geregelt werden.

## Patentansprüche

1. Verfahren zum Betrieb eines ersten Knotens (2) in einem Netzwerk (1) mit folgenden Schritten:
- Abarbeitung einer Sendeliste (17) und einer Empfangsliste (18) während eines Kommunikationszyklus,
- Empfang eines Soll-Werts (7) für eine Zeitbasis des Kommunikationszyklus in dem ersten Knoten (2) des Netzwerks (1),
- Ermittlung einer Regelabweichung aus dem Soll-Wert (7) und einem Ist-Wert der Zeitbasis,
- Erzeugung einer Stellgröße zur Nachregelung der Zeitbasis entsprechend der Regelabweichung, wobei der Soll-Wert (7) von einem Taktschläger-Knoten (5) des Netzwerks mittels eines Datentelegramms (7) an den ersten Knoten (2) gesendet wird,
**dadurch gekennzeichnet, daß** der Soll-Wert (7) von dem Taktschläger-Knoten (5) aus einer Referenzzeitbasis des Taktschläger-Knotens (5) unter Berücksichtigung der Laufzeit des Datentelegramms (7) zu dem ersten Knoten (2) bestimmt wird.

2. Verfahren nach Anspruch 1, bei dem eine Punkt-zu-Punkt Verbindung zwischen dem ersten Knoten (2) und einem zweiten Knoten (3) des Netzwerks (1) während des Kommunikationszyklus besteht.

3. Verfahren nach Anspruch 1 oder 2, bei dem es sich bei dem Netzwerk (1) um ein geschaltetes Datennetz, vorzugsweise um ein echtzeitfähiges Ethernet Netzwerk, handelt.

4. Verfahren nach einem der vorhergehenden Ansprüche 1, 2 oder 3, bei dem der erste (2) und/oder der zweite (3) Knoten ein Koppelfeld für die Herstellung einer geschalteten Punkt-zu-Punkt Verbindung aufweisen.

5. Verfahren nach einem der vorhergehenden Ansprüche 1 bis 4, wobei der Soll-Wert (7) von dem ersten Knoten (2) über das Netzwerk (1) empfangen wird.

6. Verfahren nach einem der vorhergehenden Ansprüche 1 bis 5, wobei es sich bei der Stellgröße um eine Anzahl von Takten der zeitbasis pro Kommunikationszyklus handelt.

7. Verfahren nach Anspruch 6, wobei die Anzahl der Takte für die Nachregelung der Länge des Kommunikationszyklus gleichmäßig über den aktuellen oder einen nachfolgenden Kommunikationszyklus verteilt werden.

8. Verfahren nach Anspruch 6 oder 7, wobei die Stellgröße einen ersten Parameter (S₁) und einen zweiten Parameter (S₂) aufweist, und der erste Parameter (S₁)eine Anzahl von über einen Kommunikationszyklus gleichmäßig verteilten Takten definiert und der zweite Parameter (S₂) definiert, ob die durch den ersten Parameter (S₁) definierten Takte wiederholt oder nicht auszuführen sind.

9. Verfahren nach einem der vorhergehenden Ansprüche 1 bis 8 mit einer ersten Regelungsvorschrift und mit einer zweiten Regelungsvorschrift, wobei die erste Regelungsvorschrift zur Erzeugung der Stellgröße während einer Initialisierungsphase und die zweite Regelungsvorschrift zur Erzeugung der Stellgröße während des' Betriebs verwendet wird.

10. Computerprogrammprodukt zur Durchführung eines Verfahrens nach einem der vorhergehenden Ansprüche 1 bis 9.

11. Kommunikationsnetzwerk (1) zum Aufbau von Punkt-zu-Punkt Verbindungen in synchronisierten Kommunikationszyklen mit einem Kommunikationsknoten (2) und einem Taktschläger-Knoten (5), wobei der kommunikationsknoten (2) aufweist:
- Mitteln zur Abarbeitung einer Sendeliste (17) und einer Empfangsliste (18) während eines Kommunikationszyklus,
- Mitteln (Port A) zum Empfang eines Soll-Werts (7) für eine Zeitbasis des Kommunikationszyklus des Kommunikationsknotens über eine Kommunikationsverbindung mit einem weiteren Kommunikationsknoten,
- Mitteln (19, 21) zur Ermittlung einer Regelabweichung aus dem Soll-Wert (7) und einem Ist-Wert der Zeitbasis,
- Mitteln (22, 23) zur Erzeugung einer Stellgröße zur Nachregelung der Zeitbasis entsprechend der Regelabweichung,
und wobei der Taktschläger-Knoten (5) Mitteln zur Versendung eines Datentelegramms (7) mit dem Soll-Wert (7) an den Kommunikationsknoten (2) aufweist,
**dadurch gekennzeichnet, daß** der Taktschläger-Knoten (5) eine Taktschlägerzeitbasis (6) hat und der Soll-Wert aus einem Ist-Wert der Taktschlägerzeitbasis (6) und einer Laufzeit des Datentelegramms (7) von dem Taktschläger-Knoten (5) zu dem Kommunikationsknoten (2) bestimmt wird.

12. Kommunikationsnetzwerk nach Anspruch 11, bei dem die Kommunikationsverbindung als Punkt-zu-Punkt Verbindung, vorzugsweise in einem geschalteten Datennetz, ausgebildet ist.

13. Kommunicationsnetzwerk nach Anspruch 11 oder 12, bei dem die Kommunikationsverbindung für den Empfang und/oder die Sendung von Echtzeitdaten ausgebildet ist.

14. Kommunikationsnetzwerk nach Anspruch 11, 12 oder 13, bei dem die Mittel zur Erzeugung einer Stellgröße so ausgebildet sind, dass die Nachregelung der Zeitbasis gleichmäßig über einen Kömmunikationszyklus verteilt erfolgt.

15. Kommunikationsnetzwerk nach einem der vorhergehenden Ansprüche 11 bis 14, wobei die Mittel zur Erzeugung einer Stellgröße zur Erzeugung eines ersten Parameters (S₁) und eines zweiten Parameters (S₂) der Stellgröße ausgebildet sind, wobei der erste Parameter (S₁) eine Anzahl von Takten der Zeitbasis definiert und der zweite Parameter (S₂) definiert, ob die von dem ersten Parameter (S₁) definierten Takte wiederholt oder nicht auszuführen sind.

16. Automatisierungssystem mit einem Kommunikationsnetzwerk nach einem der vorhergehenden Ansprüche 11 bis 15.

## Claims

1. Method for operating a first node (2) in a network (1) with the following steps:
- Processing of a send list (17) and a receive list (18) during a communication cycle,
- Receipt of a desired value (7) for a time base of the communication cycle in the first node (2) of the network (1),
- Determining a system deviation from the desired value (7) and an actual value of the time base,
- Generation of a manipulated value for adjusting the time base corresponding to the system deviation, with the desired value (7) being sent by a clock pulse generator node (5) of the network by means of a data telegram (7) to the first node (2),
**characterised in that** the desired value (7) is determined by the clock pulse generator node (5) from a reference time base of the clock pulse generator node (5) taking account of the delay time of the data telegram (7) to the first node (2).

2. Method in accordance with Claim 1, in which a point-to-point connection between the first node (2) and a second node (3) of the network (1) exists during the communication cycle.

3. Method in accordance with Claim 1 or 2, in which the network involved (1) is a switched data network, preferably a real-time-capable Ethernet network.

4. Method in accordance with one of the previous Claims 1, 2 or 3, in which the first (2) and/or the second (3) node feature a switching matrix for establishing a switched point-to-point connection.

5. Method in accordance with one of the previous Claims 1 to 4, where the desired value (7) is received from the first node (2) over the network (1).

6. Method in accordance with one of the previous Claims 1 to 5, where the manipulated variable involves a number of clocks of the time base per communication cycle.

7. Method in accordance with Claim 6, where the number of clocks for adjusting the length of the communication cycle is uniformly distributed over the current or a subsequent communication cycle.

8. Method in accordance with Claim 6 or 7, where the manipulated variable features a first parameter (S₁) and a second parameter (S₂), and the first parameter (S₁) defines a number of clocks distributed uniformly over a communication cycle and the second parameter (S₂) defines whether the clocks defined by the first parameter (S₁) are to be repeated or not executed.

9. Method in accordance with one of the previous Claims 1 to 8 with a first adjustment rule and with a second adjustment rule, where the first adjustment rule is used for creating a manipulated variable during an initialisation phase and the second adjustment rule for creating the manipulated variable during operation.

10. Computer program product to execute a method in accordance with one of the previous Claims 1 to 9.

11. Communication network (1) for establishing point-to-point connections in synchronised communication cycles with a communication node (2) and a clock pulse generator node (5), where the communication node (2) features:
- means for processing a send list (17) and a receive list (18) during a communication cycle,
- means (Port A) to receive a desired value (7) for a time base of the communication cycle of the communication node via a communication connection with a further communication node,
- means (19, 21) for determining a system deviation from the desired value (7) and an actual value of the time base,
- means (22, 23) for generating a manipulated value for adjusting the time base corresponding to the system deviation,
and where the clock pulse generator node (5) features means for sending a data telegram (7) with the desired value (7) to the communication node (2),
**characterised in that** the clock pulse generator note (5) has a clock pulse generator base (6) and the desired value is determined from an actual value of the clock pulse generator base (6) and a delay time of the data telegram (7) from the clock pulse generator node (5) to the communication node (2).

12. Communication network in accordance with Claim 11, in which the communication connection is embodied as a point-to-point connection, preferably a switched data network.

13. Communication network in accordance with Claim 11 or 12, in which the communication connection is embodied for the receipt and/or the sending of real-time data.

14. Communication network in accordance with Claim 11, 12 or 13, in which the means for generating a manipulated value are embodied such that the adjustment of the time base is distributed uniformly over a communication cycle.

15. Communication network in accordance with one of the previous Claims 11 to 14, where the means for generating a manipulated variable are embodied for generating a first parameter (S₁) and a second parameter (S₂) of the manipulated variable, with the first parameter (S₁) defining a number of clocks of the time base and the second parameter (S₂) defining whether the clocks defined by the first parameter (S₁) are to be repeated or not executed.

16. Automation system with a communication network in accordance with one of the previous Claims 11 to 15.

## Revendications

1. Procédé d'exploitation d'un premier noeud (2) dans un réseau (1) avec les étapes suivantes :
- traitement d'une liste d'émission (17) et d'une liste de réception (18) pendant un cycle de communication,
- réception d'une valeur de consigne (7) pour une base de temps du cycle de communication dans le premier noeud (2) du réseau (1),
- détermination d'un écart de régulation à partir de la valeur de consigne (7) et d'une valeur réelle de la base de temps,
- production d'une grandeur réglante pour la post-régulation de la base de temps en fonction de l'écart de régulation, la valeur de consigne (7) étant envoyée au premier noeud (2) par un noeud générateur d'horloge (5) du réseau au moyen d'un télégramme de données (7),
**caractérisé par le fait qu'**on détermine la valeur de consigne (7) dans le noeud générateur d'horloge (5) à partir d'une base de temps de référence du noeud générateur d'horloge (5) en tenant compte du temps de propagation du télégramme de données (7) jusqu'au premier noeud (2).

2. Procédé selon la revendication 1, dans lequel il existe une liaison point à point entre le premier noeud (2) et un deuxième noeud (3) du réseau (1) pendant le cycle de communication.

3. Procédé selon la revendication 1 ou 2, dans lequel le réseau (1) est un réseau de données à commutation, de préférence un réseau Ethernet capable de travailler en temps réel.

4. Procédé selon l'une des revendications précédentes 1, 2 ou 3, dans lequel le premier (2) et/ou le deuxième (3) noeud comportent un réseau de connexion pour l'établissement d'une liaison point à point commutée.

5. Procédé selon l'une des revendications précédentes 1 à 4, dans lequel la valeur de consigne (7) est reçue par le premier noeud (2) par l'intermédiaire du réseau (1).

6. Procédé selon l'une des revendications précédentes 1 à 5, dans lequel la grandeur réglante est un nombre de cadences de la base de temps par cycle de communication.

7. Procédé selon la revendication 6, dans lequel le nombre des cadences pour la post-régulation de la longueur du cyde de communication est réparti uniformément sur le cyde de communication actuel ou sur un cycle de communication suivant.

8. Procédé selon la revendication 6 ou 7, dans lequel la grandeur réglante comporte un premier paramètre (S₁) et un deuxième paramètre (S₂) et dans lequel le premier paramètre (S₁) définit un nombre de cadences réparties uniformément sur un cycle de communication et le deuxième paramètre (S₂) définit si les cadences définies par le premier paramètre (S₁) sont répétées ou ne sont pas à exécuter.

9. Procédé selon l'une des revendications précédentes 1 à 8, avec une première règle de régulation et avec une deuxième règle de régulation, dans lequel on utilise la première règle de régulation pour la production de la grandeur réglante pendant une phase d'initialisation et la deuxième règle de régulation pour la production de la grandeur réglante pendant le fonctionnement.

10. Programme informatique pour la mise en oeuvre d'un procédé selon l'une des revendications précédentes 1 à 9.

11. Réseau de communication (1) pour l'établissement de liaisons point à point dans des cycles de communication synchronisés, avec un noeud de communication (2) et avec un noeud générateur d'horloge (5), le noeud de communication (2) comportant :
- des moyens pour le traitement d'une liste d'émission (17) et d'une liste de réception (18) pendant un cycle de communication,
- des moyens (port A) pour la réception d'une valeur de consigne (7) pour une base de temps du cycle de communication du noeud de communication par l'intermédiaire d'une liaison de communication avec un autre noeud de communication,
- des moyens (19, 21) pour la détermination d'un écart de régulation à partir de la valeur de consigne (7) et d'une valeur réelle de la base de temps,
- des moyens (22, 23) pour la production d'une grandeur réglante pour la post-régulation de la base de temps en fonction de l'écart de régulation,
et le noeud générateur d'horloge (5) comportant des moyens pour l'émission d'un télégramme de données (7) avec la valeur de consigne (7) au noeud de communication (2),
**caractérisé par le fait que** le noeud générateur d'horloge (5) a une base de temps de générateur d'horloge (6) et que la valeur de consigne est déterminée à partir d'une valeur réelle de la base de temps de générateur d'horloge (6) et d'un temps de propagation du télégramme de données (7) du noeud générateur d'horloge (5) au noeud de communication (2).

12. Réseau de communication selon la revendication 11, dans lequel la liaison de communication est conçue comme une liaison point à point, de préférence dans un réseau de données à commutation.

13. Réseau de communication selon la revendication 11 ou 12, dans lequel la liaison de communication est conçue pour la réception et/ou l'émission de données à temps réel.

14. Réseau de communication selon la revendication 11, 12 ou 13, dans lequel les moyens pour la production d'une grandeur réglante sont conçus de telle sorte que la post-régulation de la base de temps s'effectue de manière uniformément répartie sur un cycle de communication.

15. Réseau de communication selon l'une des revendications précédentes 11 à 14, dans lequel les moyens pour la production d'une grandeur réglante sont conçus pour la production d'un premier paramètre (S₁) et d'un deuxième paramètre (S₂) de la grandeur réglante, le premier paramètre (S₁) définissant un nombre de cadences de la base de temps et le deuxième paramètre (S₂) définissant si les cadences définies par le premier paramètre (S₁) sont répétées ou ne sont pas à exécuter.

16. Système automatisé avec un réseau de communication selon l'une des revendications précédentes 11 à 15.
